(19) Europäisches Patentamt / European Patent Office / Office européen des brevets

(11) **EP 3 433 110 B1**

(12) **EUROPÄISCHE PATENTSCHRIFT**

(45) Veröffentlichungstag und Bekanntmachung des Hinweises auf die Patenterteilung:
**29.04.2020  Patentblatt 2020/18**

(21) Anmeldenummer: **17700427.2**

(22) Anmeldetag: **16.01.2017**

(51) Int Cl.:
**B60C 9/00** *(2006.01)*  **B60C 15/06** *(2006.01)*

(86) Internationale Anmeldenummer:
**PCT/EP2017/050741**

(87) Internationale Veröffentlichungsnummer:
**WO 2017/162343 (28.09.2017 Gazette 2017/39)**

(54) **FAHRZEUGLUFTREIFEN**

PNEUMATIC VEHICLE TYRES

PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2016  DE 102016204925**

(43) Veröffentlichungstag der Anmeldung:
**30.01.2019  Patentblatt 2019/05**

(73) Patentinhaber: **Continental Reifen Deutschland GmbH**
**30165 Hannover (DE)**

(72) Erfinder: **FUNK-FRIEDEK, Sascha**
**30449 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 2 740 615      EP-A1- 2 835 276**
**WO-A1-2014/001039    DE-A1-102009 025 793**

**Beschreibung**

Die Erfindung betrifft einen Fahrzeugluftreifen mit einer Radialkarkasse und zwei Wulstbereichen, welche je einen Wulstkern und einen dem Wulstkern aufsitzenden Wulstkernreiter aufweisen, wobei die Karkasse von axial innen nach axial außen um die Wulstkerne geführt ist und in einem Karkasshochschlag endet und wobei ein Wulstverstärker in dem Wulstbereich des Fahrzeugluftreifens angeordnet ist und wobei der Wulstverstärker Festigkeitsträger aufweist, welche aus mindestens einem textilen Garn bestehen.

Ein derartiger Fahrzeugluftreifen ist aus der EP 2 835 276 A1 bekannt. Der Fahrzeugluftreifen weist im Wulstverstärker textile Festigkeitsträger auf, welche aus einem Kern-Garn und aus einer Wendel aus Aramid um dieses Kerngarn bestehen. Das Kern-Garn ist beispielsweise ein Polyamid-Garn und weist eine Feinheit in einem Bereich von 700 bis 900 dtex auf.

Aus der DE 10 2009 025 793 A1 ist ein Fahrzeugluftreifen mit einem Gürtel und einer in wenigstens eine Kautschukmischung eingebetteten Festigkeitsträgerlage bekannt, welche aus wenigstens einem Polyestergarn und/oder Polyesterkord besteht und ein Wulstverstärker ist. Der Polyesterkord weist eine Feinheit von 2.000 bis 5.000 dtex, das Polyestergarn weist eine Feinheit von 1.000 bis 1.670 dtex auf. Die WO 2014/001039 A1 betrifft eine Festigkeitsträgerlage für elastomere Erzeugnisse, beispielsweise Fahrzeugreifen, wobei die Festigkeitsträger Hybridkorde sind und wenigstens ein Garn aus Polyester und wenigstens ein Garn aus Polyamid enthalten, wobei das Garn aus Polyester und wenigstens ein Garn aus Polyamid mit 340 bis 550 t/m zu einem Hybridkord miteinander endverdreht sind. Das Garn aus Polyester weist eine Feinheit von 270 bis 1.670 dtex, das Garn aus Polyamid eine Feinheit von 312 bis 1.880 dtex auf. Ein derartiger Hybridkord soll ein geringes Schrumpfverhalten und eine erhöhte bzw. verbesserte Schrumpfkraft aufweisen. Aus der EP 2 740 615 A1 ist ein Fahrzeugluftreifen mit jeweils einem Wulstverstärker in den Wulstbereichen bekannt, welcher Monofilamente als Festigkeitsträger aufweist. Die Monofilamente weisen insbesondere die Konstruktion 1 x 0,30 mm auf und sind in einer Dichte von 110 EPDM angeordnet. Ein Fahrzeugluftreifen mit derartigen Wulstverstärkerlagen soll ein verbessertes Handling aufweisen.

Wulstverstärker sind dem Fachmann hinreichend bekannt. Das obere Ende des Wulstverstärkers, welches dem Gürtel zugewandt ist, kann oberhalb oder unterhalb des oberen Endes des Wulstkernreiters enden und das untere Ende des Wulstverstärkers endet auf Höhe des Wulstkernreiters oder auf Höhe des Wulstkernes. Das obere Ende des Wulstverstärkers reicht gemäß dieser Erfindung nie unter den Gürtel. Der Wulstverstärker ist eine gummierte Festigkeitsträgerlage, welche parallel zueinander und voneinander beanstandete Festigkeitsträger aufweist und welche ringkreisförmig im Bereich des Wulstes um den Reifen umläuft.

Man ist ständig bemüht, an Kosten und an Gewicht des Reifens einzusparen sowie den Rollwiderstand des Reifens zu verbessern, ohne seine übrigen Eigenschaften nachteilig zu beeinflussen.

Es ist daher die Aufgabe der Erfindung, einen Fahrzeugluftreifen zur Verfügung zu stellen, bei dem an Kosten und an Gewicht eingespart ist, der einen verbesserten Rollwiderstand aufweist, ohne dessen übrigen Eigenschaften nachteilig zu beeinflussen.

Die Aufgabe wird gelöst, indem alle textilen Garne des Festigkeitsträgers aus dem gleichen Material bestehen und dass jedes Garn eine Feinheit < 700 dtex aufweist.

Der Wulstverstärker des erfindungsgemäßen Reifens weist Festigkeitsträger von geringem Durchmesser auf, wodurch der Wulstverstärker als solches eine vergleichbar dünne Lage ist. Es ist weniger Material eingesetzt, wodurch an Kosten und an Gewicht des Reifens eingespart ist. Zudem ist der Rollwiderstand des Reifens positiv beeinflusst. Dadurch, dass der Festigkeitsträger aus den gleichen textilen Garnen besteht, sind die Prozesskosten zur Herstellung dieses Festigkeitsträgers vergleichsweise gering.
Der Wulstverstärker reicht mit seinem dem Gürtel zugewandten Ende nicht bis unter diesen.

In einer Ausführungsform der Erfindung weist jedes Garn eine Feinheit ≤ 500 dtex auf. Hierdurch sind Festigkeitsträger für den Wulstverstärker geschaffen, welche einen besonders geringen Durchmesser aufweisen, welches sich vorteilhaft hinsichtlich des Gewichts und somit dem Rollwiderstand des Reifens auswirkt.

Zweckmäßig ist es, wenn die Festigkeitsträger getwistete Garne sind. Verdrehte Garne weisen eine verbesserte Ermüdungsbeständigkeit im Vergleich zu unverdrehten Garnen auf.

Zweckmäßig ist es, wenn die Festigkeitsträger eine der Konstruktionen 1x1, 1x2 oder 1x3 aufweisen.

Vorteilhaft ist es, wenn Festigkeitsträger der Konstruktion 1 x 1 einen Twistfaktor $\alpha$ von 10 bis 80, vorzugsweise 30 bis 50, aufweisen, wobei

$\alpha = t/m \times \sqrt{\frac{dtex}{10000}}$, mit t/m: Twists pro Meter und dtex: dtex des gesamten Kordes.

Ebenso vorteilhaft ist es, wenn Festigkeitsträger der Konstruktion 1x2 oder der Konstruktion 1x3 einen Twistfaktor $\alpha$ von 50 bis 300, vorzugsweise 100 bis 200,

aufweisen, wobei $\alpha = t/m \times \sqrt{\frac{dtex}{10000}}$, mit t/m: Twists pro Meter und dtex: dtex des gesamten Kordes.

Um eine gute Gummipenetration zwischen den Festigkeitsträgern des Wulstverstärkers sicherzustellen, sind die Festigkeitsträger innerhalb des Wulstverstärkers unter einem lichten Abstand von mindestens 0,1 mm angeordnet.

Vorteilhaft ist es, wenn das Garn aus Polyamid, insbesondere aus Polyamid 6.6, besteht. Polyamid, insbesondere Polyamid 6.6 (PA6.6) ist kostengünstiger gegenüber Aramid und eignet sich aufgrund seiner physikalischen Eigenschaften, gegenüber Stahl und Aramid, besonders für den Einsatz als Festigkeitsträger im Wulstverstärker.

Alternativ besteht das Garn aus Polyester, Rayon oder hocharomatischem Polyamid.

Vorteilhaft ist es, wenn jedes Garn eine Feinheit von 470 dtex, 312 dtex oder 235 dtex aufweist und oder wenn die Festigkeitsträger im Wulstverstärker in einer Dichte von 80 bis 130 epdm angeordnet sind.

In einer bevorzugten Ausführung der Erfindung weist der Wulstverstärker Festigkeitsträger aus Polyamid, vorzugsweise aus PA 6.6 mit der Konstruktion 470x2 und in einer Dichte von 80 bis 130 epdm auf. Je nach Kraft-Dehnungseigenschaften der Polyamid-Festigkeitsträger, welche durch den Herstellprozeß des Polyamid-Garnes einstellbar sind, können die Festigkeitsträger nach Erfordernis dichter oder weniger dicht in dem Wulstverstärker angeordnet sein.

"epdm" steht für ends per decimenter und gibt die Dichte an, in der die Festigkeitsträger in der Verstärkungslage angeordnet sind.

Vorteilhaft ist es, wenn der Wulstverstärker einlagig ausgebildet ist, da hierdurch bereits ein ausreichender Kreuzverband mit der Karkasslage gebildet wird. Weitere Lagen würden Gewicht, Kosten und Rollwiderstand erhöhen, aber nicht im gleichen Maße die Wirksamkeit bezüglich der Fahreigenschaften.

In einer Ausführungsform ist der Wulstverstärker zwischen Wulstkernreiter und Karkasshochschlag angeordnet. In einer alternativen Ausführungsform ist der Wulstverstärker axial außen in Bezug auf den Karkasshochschlag angeordnet. In einer wiederum alternativen Ausführungsform ist der Wulstverstärker axial innen in Bezug auf den Wulstkern angeordnet und zwischen Karkasse und Wulstkern platziert.

Die hohe Wirksamkeit des Kreuzverbandes mit der Karkasse wird in allen drei vorgenannten Ausführungsformen erreicht.

Weitere Merkmale, Vorteile und Einzelheiten der Erfindung werden nun anhand der Zeichnungen, welche schematische Ausführungsbeispiele darstellen, näher beschrieben. Dabei zeigt die

> Fig. 1 einen Querschnitt durch den Wulstbereich eines erfindungsgemäßen Fahrzeugluftreifens;
> Fig. 2 einen Querschnitt durch den Wulstbereich eines anderen erfindungsgemäßen Fahrzeugluftreifens;
> Fig. 3 einen Querschnitt durch den Wulstbereich eines wiederum anderen erfindungsgemäßen Fahrzeugluftreifens.

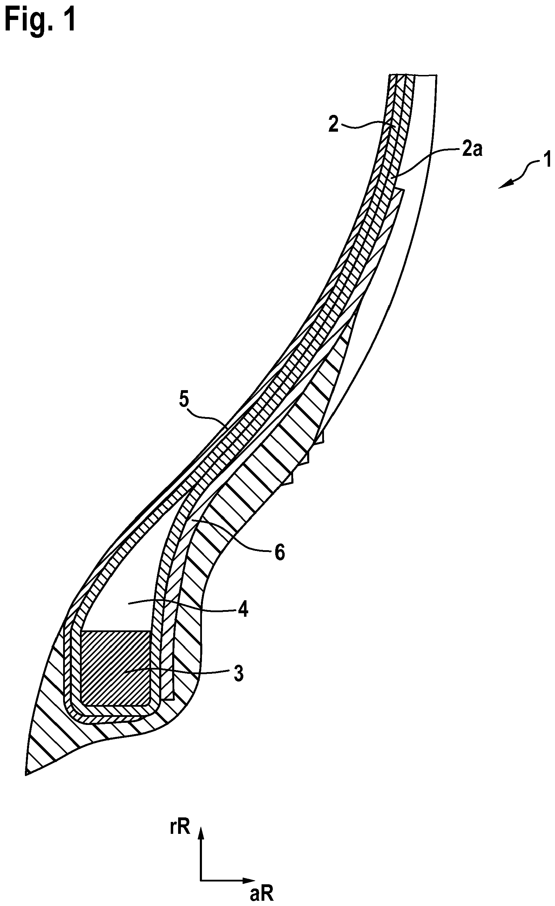

Die Fig. 1 zeigt einen Querschnitt durch den Wulstbereich 1 eines Fahrzeugluftreifens, hier eines PKW-Reifens radialer Bauart. Der PKW-Reifen weist eine übliche Standardkonstruktion auf, mit zwei Seitenwänden, einem Kronenbereich, mit einer Karkasse 2, welche die Wulstkerne 3 und die den Wulstkernen 3 aufsitzenden Wulstkernreiter 4 von axial innen nach axial außen umläuft und in einem Karkasshochschlag 2a endet, mit einer luftdicht ausgeführten Innenschicht 5, einem mehrlagigen Gürtel und einem Laufstreifen.

Der Wulstbereich 1 weist einen einlagig ausgeführten Wulstverstärker 6 auf. Der Wulstverstärker 6 ist axial außen in Bezug auf den Karkasshochschlag 2a angeordnet und befindet sich unmittelbar benachbart zu diesem. Der Wulstverstärker 6 weist Festigkeitsträger aus PA 6.6 der Konstruktion 470x2 auf. Die Corde schließen einen Winkel $\alpha$ von 30° bis 60° mit der Umfangsrichtung ein. Die Corde sind in einer Dichte von 130 epdm im Wulstverstärker 6 angeordnet.

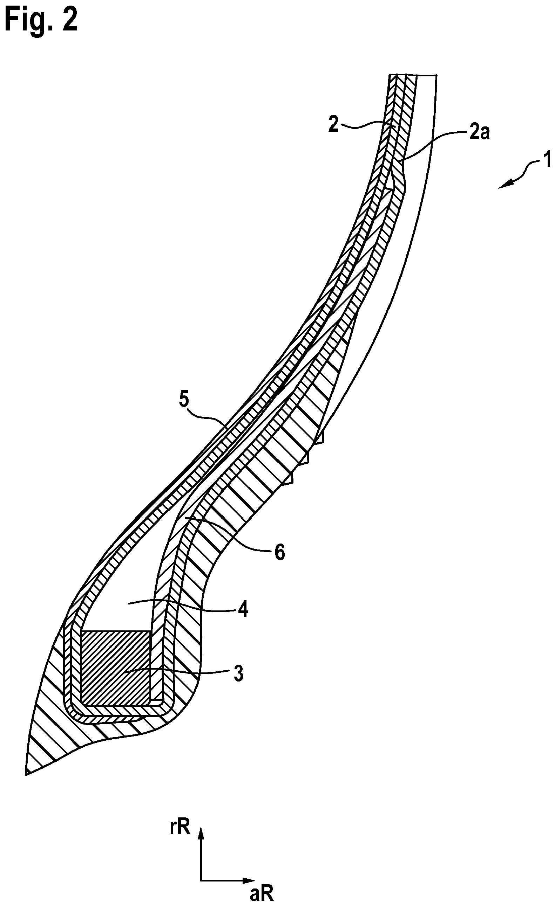

Die Fig. 2 zeigt einen Querschnitt durch den Wulstbereich eines anderen erfindungsgemäßen Fahrzeugluftreifens. Der Wulstbereich 1 der Fig. 2 unterscheidet sich dadurch von dem Wulstbereich der Fig. 1, dass der Wulstverstärker 6 zwischen Kern 3 / Wulstkernreiter 4 und Karkasshochschlag 2a angeordnet ist.

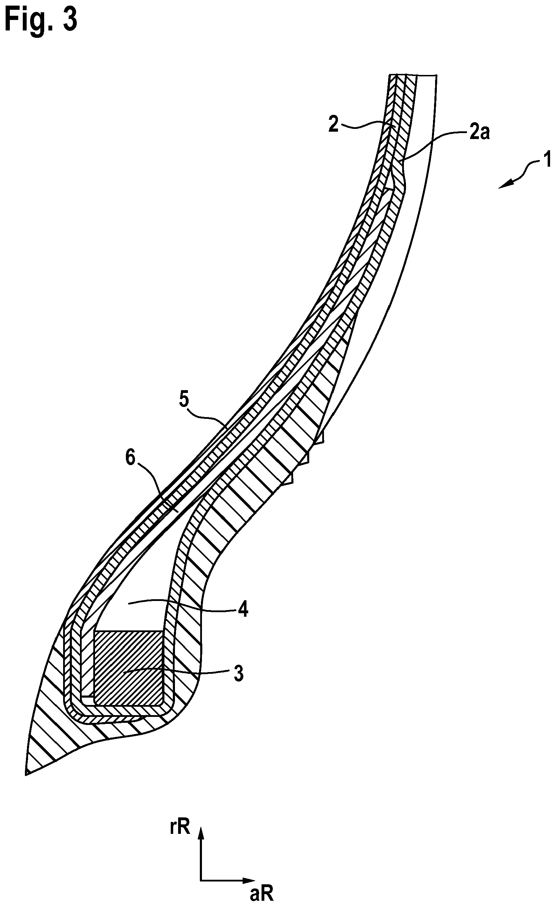

Die Fig. 3 zeigt einen Querschnitt durch den Wulstbereich eines wiederum anderen erfindungsgemäßen Fahrzeugluftreifens. Der Wulstbereich 1 der Fig. 3 unterscheidet sich dadurch von dem Wulstbereich der Fig. 1, dass der Wulstverstärker 6 axial innen von Kern 3 und Wulstkernreiter 4 zwischen Kern 3 / Wulstkernreiter 4 und Karkasshochschlag 2a angeordnet ist.

## Bezugszeichenliste

1 Wulstbereich
2 Karkasse
2a Karkasshochschlag
3 Wulstkern
4 Wulstkernreiter
5 Innenschicht
6 Wulstverstärker

rR radiale Richtung
aR axiale Richtung

## Patentansprüche

1. Fahrzeugluftreifen mit einer Radialkarkasse (2) und zwei Wulstbereichen (1), welche je einen Wulstkern (3) und einen dem Wulstkern (3) aufsitzenden Wulstkernreiter (4) aufweisen, wobei die Karkasse (2) von axial innen nach axial außen um die Wulstkerne (3) geführt ist und in einem Karkasshochschlag (2a) endet und wobei Wulstverstärker (6) in den beiden Wulstbereichen (1) des Fahrzeugluftreifens angeordnet sind und wobei der Wulstverstärker (6) Festigkeitsträger aufweist, welche aus mindestens einem textilen Garn bestehen, **dadurch gekennzeichnet, dass** alle textilen Garne des Festigkeitsträgers aus dem gleichen Material bestehen und dass jedes Garn eine Feinheit < 700 dtex aufweist.

2. Fahrzeugluftreifen nach Anspruch 1, **dadurch gekennzeichnet, dass** jedes Garn eine Feinheit ≤ 500 dtex aufweist.

3. Fahrzeugluftreifen nach Anspruch 1 oder 2, **dadurch gekennzeichnet, dass** die Festigkeitsträger getwistete Garne sind.

4. Fahrzeugluftreifen nach einem der Ansprüche 1 bis 3, **dadurch gekennzeichnet, dass** die Festigkeitsträger eine der Konstruktionen 1x1, 1x2 oder 1x3 aufweisen.

5. Fahrzeugluftreifen nach Anspruch 4, **dadurch gekennzeichnet, dass** Festigkeitsträger der Konstruktion $1 \times 1$ einen Twistfaktor $\alpha$ von 10 bis 80, vorzugsweise 30 bis 50, aufweisen, wobei

$$\alpha = t/m \times \sqrt{\frac{dtex}{10000}},$$ mit t/m: Twists pro Meter und dtex: dtex des gesamten Kordes.

6. Fahrzeugluftreifen nach Anspruch 4, **dadurch gekennzeichnet, dass** Festigkeitsträger der Konstruktion 1x2 oder der Konstruktion 1x3 einen Twistfaktor $\alpha$ von 50 bis 300, vorzugsweise 100 bis 200,

aufweisen, wobei $\alpha = t/m \times \sqrt{\frac{dtex}{10000}},$ mit t/m: Twists pro Meter und dtex: dtex des gesamten Kordes.

7. Fahrzeugluftreifen nach einem der Ansprüche 1 bis 6, **dadurch gekennzeichnet, dass** die Festigkeitsträger innerhalb des Wulstverstärkers (6) unter einem lichten Abstand von mindestens 0,1 mm angeordnet sind.

8. Fahrzeugluftreifen nach einem der Ansprüche 1 bis 7, **dadurch gekennzeichnet, dass** das Garn aus Polyamid, insbesondere aus Polyamid 6.6, besteht.

9. Fahrzeugluftreifen nach einem der Ansprüche 1 bis 7, **dadurch gekennzeichnet, dass** das Garn aus Polyester, Rayon oder hocharomatischem Polyamid besteht.

10. Fahrzeugluftreifen nach einem der Ansprüche 1 bis 9, **dadurch gekennzeichnet, dass** jedes Garn eine Feinheit von 470 dtex, 312 dtex oder 235 dtex aufweist.

11. Fahrzeugluftreifen nach einem oder mehreren der vorangehenden Ansprüche, **dadurch gekennzeichnet, dass** die Festigkeitsträger im Wulstverstärker (6) in einer Dichte von 80 bis 130 epdm angeordnet sind.

12. Fahrzeugluftreifen nach einem oder mehreren der vorangehenden Ansprüche, **dadurch gekennzeichnet, dass** der Wulstverstärker (6) Festigkeitsträger aus Polyamid, vorzugsweise aus PA 6.6 mit der Konstruktion 470x2 und in einer Dichte von 80 bis 130 epdm aufweist.

13. Fahrzeugluftreifen nach einem oder mehreren der vorangehenden Ansprüche, **dadurch gekennzeichnet, dass** der Wulstverstärker (6) einlagig ausgebildet ist.

**Claims**

1. Pneumatic vehicle tyre with a radial carcass (2) and two bead regions (1), which each have a bead core (3) and a bead filler (4) located on the bead core (3), wherein the carcass is led from axially on the inside axially outwards around the bead cores (3) and ends in a carcass turn-up (2a), and wherein bead reinforcers (6) are arranged in the two bead regions (1) in the pneumatic vehicle tyre, and wherein the bead reinforcer (6) has reinforcing elements which consist of at least one textile yarn, **characterized in that** all of the textile yarns of the reinforcing element are composed of the same material, and **in that** each yarn has a yarn count <700 dtex.

2. Pneumatic vehicle tyre according to Claim 1, **characterized in that** each yarn has a yarn count ≤500 dtex.

3. Pneumatic vehicle tyre according to Claim 1 or 2, **characterized in that** the reinforcing elements are twisted yarns.

4. Pneumatic vehicle tyre according to one of Claims 1 to 3, **characterized in that** the reinforcing elements have one of the structures $1 \times 1$, $1 \times 2$ or $1 \times 3$.

5. Pneumatic vehicle tyre according to Claim 4, **characterized in that** reinforcing elements of the structure $1 \times 1$ have a twist factor $\alpha$ of 10 to 80, preferably 30 to 50, wherein $\alpha = t/m \times \sqrt{\frac{dtex}{10000}},$

where t/m: twists per metre and dtex: dtex of the entire cord.

6. Pneumatic vehicle tyre according to Claim 4, **characterized in that** reinforcing elements of the structure $1 \times 2$ or of the structure $1 \times 3$ have a twist factor $\alpha$ of 50 to 300, preferably 100 to 200, wherein

$$\alpha = t/m \times \sqrt{\frac{dtex}{10000}},$$ where t/m: twists per metre and dtex: dtex of the entire cord.

**7.** Pneumatic vehicle tyre according to one of Claims 1 to 6, **characterized in that** the reinforcing elements within the bead reinforcer (6) are arranged at a clear distance of at least 0.1 mm.

**8.** Pneumatic vehicle tyre according to one of Claims 1 to 7, **characterized in that** the yarn is composed of polyamide, in particular of polyamide 6.6.

**9.** Pneumatic vehicle tyre according to one of Claims 1 to 7, **characterized in that** the yarn is composed of polyester, rayon or highly aromatic polyamide.

**10.** Pneumatic vehicle tyre according to one of Claims 1 to 9, **characterized in that** each yarn has a yarn count of 470 dtex, 312 dtex or 235 dtex.

**11.** Pneumatic vehicle tyre according to one or more to the preceding claims, **characterized in that** the reinforcing elements in the bead reinforcer (6) are arranged in a density of 80 to 130 epdm.

**12.** Pneumatic vehicle tyre according to one or more of the preceding claims, **characterized in that** the bead reinforcer (6) has reinforcing elements made of polyamide, preferably of PA 6.6 with the structure $470 \times 2$ and in a density of 80 to 130 epdm.

**13.** Pneumatic vehicle tyre according to one or more of the preceding claims, **characterized in that** the bead reinforcer (6) is formed as a single layer.

**Revendications**

**1.** Pneumatique de véhicule comprenant une carcasse radiale (2) et deux zones de talon (1) qui comportent chacune un noyau de talon (3) et un cavalier de noyau de talon (4) assis sur le noyau de talon (3), la carcasse (2) étant guidée axialement de l'intérieur vers l'extérieur autour des noyaux de talon (3) et se terminant par un rabat de carcasse (2a) et le renfort de talon (6) étant disposé dans les deux zones de talon (1) du pneumatique de véhicule pneumatique et le renfort de talon (6) comportant des éléments de résistance qui comprennent au moins un fil textile, **caractérisé en ce que** tous les fils textiles de l'élément de résistance sont formés du même matériau et **en ce que** chaque fil a une finesse < 700 dtex.

**2.** Pneumatique de véhicule selon la revendication 1, **caractérisé en ce que** chaque fil a une finesse $\leq$ 500 dtex.

**3.** Pneumatique de véhicule selon la revendication 1 ou 2, **caractérisé en ce que** les éléments de résistance sont des fils torsadés.

**4.** Pneumatique de véhicule selon l'une des revendications 1 à 3, **caractérisé en ce que** les éléments de résistance ont l'une des constructions 1x1, 1x2 ou 1x3.

**5.** Pneumatique de véhicule selon la revendication 4, **caractérisé en ce que** les éléments de résistance de la construction 1x1 ont un facteur de torsion $\alpha$ de 10 à 80, de préférence de 30 à 50,

$$\alpha = t/m \times \sqrt{\frac{dtex}{10000}},$$ avec t/m : torsions par mètre et dtex : dtex de tout le cordon.

**6.** Pneumatique de véhicule selon la revendication 4, **caractérisé en ce que** les éléments de résistance de la construction 1x2 ou de la construction 1x3 ont un facteur de torsion $\alpha$ de 50 à 300, de préférence 100 à 200, $$\alpha = t/m \times \sqrt{\frac{dtex}{10000}},$$ avec t/m : torsions par mètre et dtex : dtex de tout le cordon.

**7.** Pneumatique de véhicule selon l'une des revendications 1 à 6, **caractérisé en ce que** les éléments de résistance sont disposés à l'intérieur du renfort de talon (6) avec un jeu d'au moins 0,1 mm.

**8.** Pneumatique de véhicule selon l'une des revendications 1 à 7, **caractérisé en ce que** le fil est en polyamide, notamment en polyamide 6.6.

**9.** Pneumatique de véhicule selon l'une des revendications 1 à 7, **caractérisé en ce que** le fil est en polyester, en rayonne ou en polyamide hautement aromatique.

**10.** Pneumatique de véhicule selon l'une des revendications 1 à 9, **caractérisé en ce que** chaque fil a une finesse de 470 dtex, 312 dtex ou 235 dtex.

**11.** Pneumatique de véhicule selon l'une au moins des revendications précédentes, **caractérisé en ce que** les éléments de résistance sont disposés dans le renfort de talon (6) à une densité de 80 à 130 epdm.

**12.** Pneumatique de véhicule selon l'une au moins des revendications précédentes, **caractérisé en ce que** le renfort de talon (6) comporte des éléments de résistance en polyamide, de préférence en PA 6.6 avec la construction 470x2 et à une densité de 80 à 130 epdm.

**13.** Pneumatique de véhicule selon l'une au moins des revendications précédentes, **caractérisé en ce que** le renfort de talon (6) est formé d'une seule couche.

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2835276 A1
- DE 102009025793 A1
- WO 2014001039 A1
- EP 2740615 A1